# EUROPEAN PATENT APPLICATION

(11) **EP 0 992 192 A1**
(43) Date of publication of application: **12.04.2000**
(21) Application number: 99202575.9
(22) Date of filing: 05.08.1999
(51) Int. Cl.: A21D 2/18, A21D 13/00, A21D 13/08, A23L 1/0522, A23L 1/187

(54) **Sweet bakery product also consumable as a beverage**

(30) Priority: 28.09.1998 DE 29817371 U
(71) Applicant: SOCIETE DES PRODUITS NESTLE S.A., 1800 Vevey (CH)
(72) Inventor: Desjardins, Jean-Jacques, 1026 Denges (CH); Holz Gagg, Katrin, 1009 Pully (CH); Wuersch, Pierre, 1814 La Tour-de-Peilz (CH)
(74) Representative: Wavre, Claude-Alain

(57) **Abstract**

Sweet bakery product that is also consumable as a beverage after stirring into hot milk and can be produced by baking a dough-like shapable composition which is without cereal flour contents and comprises starch and mono- and/or disaccharides as well as fat, plant proteins, and/or flavouring, aromatizing and colouring ingredients and/or raising agent.

## Description

The present invention relates to a sweet bakery product that, after stirring into hot milk, is also consumable as a beverage.

Sweet bakery products, which for the purposes of the present invention is taken to mean especially sweet small bakery products of the deposited cake-type biscuit or other biscuit type, and products from which, with the addition of liquid, beverages can be prepared, traditionally belong to different types of food products.

Although, in the infant food sector, there are also foods of the baked goods type which readily disintegrate in contact with milk and can be stirred to form pulpy beverages. These generally do not have the character of a beverage without solids contents.

European Patent Application EP 0 743 003 A1 discloses a bakery product that is soluble in tepid or hot aqueous liquids such as milk, which bakery product, based on the total weight of dry matter, comprises from 20 to 62% of a starch, in particular maize starch or wheat starch, and from 13 to 45% of mono- and disaccharides in the form of sucrose and glucose syrup, as well as fat, soya proteins and cocoa or chocolate. From a mixture comprising the said ingredients, a shapable dough is produced with addition of water, which dough is shaped in a conventional manner to form a small bakery product of the biscuit type and baked. The bakery product can be processed to form a beverage by dissolution in milk of a temperature of 40°C or above, or, if the relative amount of milk is decreased, can also be processed to form a pudding composition.

According to the present invention, a sweet bakery product is created that is consumable as such or, after stirring into hot milk, is consumable as a beverage in the form of a homogeneous liquid, which bakery product, however, differs considerably in its composition from the bakery product according to EP 0 743 003.

A sweet bakery product according to the present invention that is also consumable as a beverage after stirring into milk is characterized in that it can be produced by baking a dough-like shapable composition which is without cereal flour contents and comprises from 15 to 19.5% by weight (dry matter) of starch and from 50 to 53% by weight (dry matter) of mono- and/or disaccharides as well as fat and/or plant proteins and/or flavouring, aromatizing and colouring ingredients and/or raising agent and salt and, if appropriate, water.

The content of mono- and disaccharides is preferably provided by sucrose, for example in the form of granulated sugar, fructose and glucose syrup, in which case the glucose syrup, owing to its liquid, syrupy consistency, mixed with small amounts of water, contributes to the fact that a dough-like to viscous, shapable composition can be produced from the ingredients, which composition can be processed to give shaped dough pieces.

The starch used is preferably a native maize starch or wheat starch, e.g. a native waxy maize starch, it being assumed, however, that other starches may also prove to be suitable.

By baking the composition prepared from the homogeneously mixed ingredients and shaped to form small bakery product pieces, a sweet bakery product is obtained which has a hardness that is comparable with conventional biscuit bakery product, and can also be consumed directly as fine-tasting bakery product. After stirring it into hot milk, e.g. in the form of whole milk, skimmed milk, low-fat milk or a plant-origin milk such as soya milk, a beverage is obtained that then can be consumed as a beverage, e.g. a cocoa beverage, if the bakery product has the required contents of flavouring constituents, e.g. cocoa.

To produce a particularly attractive embodiment, the bakery product of the invention can additionally be completely or partially coated with cocoa products, e.g. white chocolate, or be provided with a decoration, e.g. in the form of a point, made of cocoa products, e.g. white chocolate, since white chocolate, for example, is likewise soluble in hot milk.

It is to be considered surprising that a composition which comprises less than 20% by weight of starch, no cereal flour and more than 50% by weight of sugar in the form of mono- and disaccharides can be baked to give a bakery product of the biscuit type that is fairly readily soluble in hot milk gives a fine-tasting beverage.

The sweet bakery product of the invention is described in more detail below with reference to an illustrative example for its production.

### Example

By mixing maize starch (native waxy maize starch), granulated sugar, cocoa powder, butter, glucose syrup, soya flour, ammonium bicarbonate, salt and fructose, a homogeneous mixture was produced which had the following composition (in % by weight):

| | |
|---|---|
| Maize starch | 15 % |
| Granulated sugar | 35.2 % |
| Cocoa powder | 13.224 % |
| Butter | 11.57 % |
| Glucose syrup | 8.04 % |
| Fructose | 8.04 % |
| Soya flour | 1.81 % |
| Ammonium bicarbonate | 1.074 % |
| Salt | 0.248 % |
| Water | 5.786 % |
| | 100.00 % |

After mixing the constituents, forming a smooth, shapable dough of relatively low viscosity, in a conventional manner, dough pieces for biscuits were produced which were baked in an oven for a period of about 15 minutes at about 150°C.

A fine-tasting sweet bakery product of the cocoa deposited cake-type biscuit in the form of typical deposited cake-like biscuits or other biscuits was obtained which biscuits have an average hardness of 0.632 ± 0.025 kN and which can be consumed like conventional biscuits.

By stirring approximately 18 g (5 pieces) of the said biscuits into approximately 150 ml of hot milk, a fine-tasting cocoa beverage is obtained that contains virtually no perceptible solids.

By stirring more or fewer biscuits into the milk, the taste of the resulting milk beverage can be adapted to the consumer's personal taste.

## Claims

1. Sweet bakery product that is also consumable as a beverage after stirring into hot milk, characterized in that it can be produced by baking a dough-like shapable composition which is without cereal flour contents and comprises from 15 to 19.5% by weight (dry matter) of starch and from 50 to 53% by weight (dry matter) of mono- and/or disaccharides as well as fat and/or plant proteins and/or flavouring, aromatizing and colouring ingredients and/or raising agent and salt and, if appropriate, external water.

2. Sweet bakery product according to Claim 1, characterized in that the content of mono- or disaccharides is formed by sucrose, fructose and glucose syrup.

3. Sweet bakery product according to Claim 1, characterized in that the starch is a native maize starch or wheat starch.

4. Sweet bakery product according to one of Claims 1 to 3, characterized in that, after dissolution in hot milk in an amount of from 5 to 15 parts by weight of bakery product per 100 parts by weight of milk a homogeneous beverage having virtually no perceptible solids content is provided.

5. Sweet bakery product according to one of Claims 1 to 4, characterized in that it can be produced by baking a composition which comprises cocoa powder and salt as flavouring, aromatizing and colouring ingredients, butter and/or margarine as fat, as well as plant proteins in the form of soya flour, the total content of these constituents being in the range from 20 to 30% by weight, preferably from 24 to 28% by weight.

6. Sweet bakery product according to one of Claims 1 to 5, characterized in that it is wholly or partially provided with a coating or a decoration made of cocoa products.

7. Sweet bakery product according to Claim 6, characterized in that the cocoa product used is white chocolate.
